# EUROPÄISCHE PATENTSCHRIFT

(11) **EP 2 434 144 B1**
(45) Veröffentlichungstag und Bekanntmachung des Hinweises auf die Patenterteilung: **28.10.2015**
(21) Anmeldenummer: 11007098.4
(22) Anmeldetag: 01.09.2011
(51) Int. Cl.: F03D 1/06

(54) **Rotorblatt oder Rotorblattsegment für eine Windenergieanlage**
Rotor blade or rotor blade segment for a wind turbine
Pale de rotor ou segment d'une pale de rotor pour une éolienne

(30) Priorität: 22.09.2010 DE 102010046518
(43) Veröffentlichungstag der Anmeldung: 28.03.2012
(73) Patentinhaber: Nordex Energy GmbH, 22419 Hamburg (DE)
(72) Erfinder: Klein, Hendrik, 18057 Rostock (DE)
(74) Vertreter: Hauck Patentanwaltspartnerschaft mbB

(56) Entgegenhaltungen:
- EP-A1- 0 019 691
- EP-A2- 2 199 604
- EP-B1- 1 244 873
- WO-A2-2009/135902

## Beschreibung

Die Erfindung betrifft ein Rotorblatt oder ein Rotorblattsegment für eine Windenergieanlage, das mit einem Seil an einer Rotornabe oder an einem weiteren Rotorblattsegment befestigt wird.

Herkömmlicherweise erfolgt die Verbindung eines Rotorblatts mit einer Rotornabe durch Verschraubung des Rotorblatts mit einem Flansch der Rotornabe. Hierzu kann das Rotorblatt entweder ebenfalls einen Flansch aufweisen, durch den Gewindebolzen hindurchgeführt werden, oder die Gewindebolzen können in einer Wandung des Rotorblatts verankert werden, beispielsweise durch Einschrauben in einen Metallzylinder mit einer Gewindebohrung, der in einer senkrecht zur Längsrichtung des Gewindebolzens verlaufenden Bohrung in der Wandung des Rotorblatts aufgenommen ist.

Ebenfalls bekannt sind in mehrere Rotorblattsegmente unterteilte Rotorblätter. Eine Verbindung zwischen den Rotorblattsegmenten kann ebenfalls mit Gewindebolzen erfolgen. Die Druckschrift EP 2 199 604 A2 zeigt hierzu speziell geformte Einsatzstücke, die fest mit dem Rotorblattsegment verbunden sind und die Gewindebolzen aufnehmen.

Das bekannte Dokument EP 0019961 umfasst eine Rotorblattmontage mit einem ununterbrochenen Seil, wobei das Seil an der Rotorblattspitze und an der Rotorblattwurzel verankert ist und zwei U-förmig umgelenkten Abschnitte aufweißt.

Aus dem US-Patent Nr. US 7,393,184 B2 ist ein anderes, modular aufgebautes Rotorblatt für Windenergieanlagen bekannt geworden. Das bekannte Rotorblatt ist "scheibchenweise" aus einer Vielzahl von Rotorblattsegmenten aufgebaut, wobei Stahlseile durch die gesamte Länge der einzelnen Rotorblattsegmente hindurchgeführt und hinter einem nabenseitigen Endsegment und einem blattspitzenseitigen Endsegment verankert sind. In jedem Rotorblattsegment verlaufen parallel zu den Stahlseilen spezielle Versteifungselemente, die im Inneren des Rotorblatts angeordnet sind.

Davon ausgehend ist es die Aufgabe der Erfindung, ein Rotorblatt oder ein Rotorblattsegment für eine Windenergieanlage zur Verfügung zu stellen, das besonders einfach aufgebaut ist und einfach und stabil mit mindestens einem Seil an einer Rotornabe oder an einem weiteren Rotorblattsegment befestigt werden kann, sowie ein Verfahren zur Befestigung eines solchen Rotorblatts oder Rotorblattsegments an einer Rotornabe oder an einem weiteren Rotorblattsegment.

Diese Aufgabe wird gelöst durch das Rotorblatt oder Rotorblattsegment für eine Windenergieanlage mit den Merkmalen des Anspruchs 1. Vorteilhafte Ausgestaltungen sind in den sich anschließenden Unteransprüchen angegeben.

Das Rotorblatt oder Rotorblattsegment hat mindestens ein Seil zur Befestigung des Rotorblatts bzw. des Rotorblattsegments an einer Rotornabe oder an einem weiteren Rotorblattsegment, wobei das mindestens eine Seil innerhalb des Rotorblatts bzw. des Rotorblattsegments U-förmig umgelenkt ist.

Das mindestens eine Seil kann insbesondere aus Stahl, aber auch aus Kunststoff bestehen. Es ist aus einer Vielzahl von in Längsrichtung des Seils erstreckten Elementen, insbesondere aus einer Vielzahl von Litzen, aufgebaut. Dies führt zu einer hohen Zugfestigkeit des Seils, die insbesondere höher sein kann als diejenige eines massiven Bolzens gleichen Querschnitts.

Das Rotorblatt oder Rotorblattsegment kann eine Anschlussfläche aufweisen, die im an einer Rotornabe oder einem weiteren Rotorblattsegment montierten Zustand des Rotorblatts bzw. Rotorblattsegments der Rotornabe bzw. dem weiteren Rotorblattsegment zugewandt ist. Die Anschlussfläche kann an eine Anschlussfläche des weiteren Rotorblattsegments unmittelbar angrenzen bzw. an einer Kontaktfläche, insbesondere einem Flansch, der Rotornabe anliegen. Aus der Anschlussfläche können beide Enden des Seils hervorstehen, so dass das Rotorblatt bzw. Rotorblattsegment durch Ausüben einer Zugkraft auf die Enden des Seils an die Rotornabe bzw. das weitere Rotorblattsegment herangezogen werden kann. Die Anschlussfläche kann eben sein.

Bei der Erfindung ist das mindestens eine Seil innerhalb des Rotorblatts bzw. Rotorblattsegments U-förmig umgelenkt. U-förmig umgelenkt bedeutet, dass zwei sich an die U-Form anschließende Längsabschnitte des Seils sich in im Wesentlichen paralleler Richtung erstrecken können, so dass durch Ausüben einer Zugspannung auf diese Längsabschnitte des Seils das Rotorblatt bzw. Rotorblattsegment mit einer Rotornabe bzw. einem weiteren Rotorblattsegment verspannt werden kann. Die U-Form kann zwei Schenkelabschnitte aufweisen, die im Wesentlichen parallel zueinander angeordnet sind und sich an einen mittleren, die beiden Schenkelabschnitte verbindenden, gekrümmten Basisabschnitt anschließen. Die Schenkelabschnitte können eine beliebige Länge aufweisen, insbesondere können sie sehr kurz sein. Sich an die U-Form anschließende Abschnitte des Seils und/oder Schenkelabschnitte der U-Form können sich im Wesentlichen in Längsrichtung des Rotorblatts bzw. Rotorblattsegments erstrecken. Der mittlere Abschnitt kann halbkreisförmig sein, aber auch eine hiervon abweichende Geometrie aufweisen, die im Wesentlichen einen Bogen mit einem Winkel von annähernd 180° überstreicht, beispielsweise einen geradlinigen Abschnitt mit zwei sich daran anschließenden 90°-Bögen oder einen parabelförmigen oder elliptischen Abschnitt. Die U-Form kann auch im Wesentlichen auf einen solchen mittleren, bogenförmigen Abschnitt reduziert sein und z.B. ausschließlich aus einem Halbkreis bestehen. Für eine optimale Krafteinleitung in das Rotorblatt bzw. Rotorblattsegment ist ein Bogen, der einen Winkel von 180° überstreicht, ideal. Bei entsprechender Auslegung sind jedoch auch größere Abweichungen von diesem Winkel möglich.

Der U-förmig umgelenkte Abschnitt des mindestens einen Seils kann innerhalb eines Anschlussbereichs angeordnet sein, der sich nur über einen an die Anschlussfläche angrenzenden Längsabschnitt des Rotorblatts bzw. des Rotorblattsegments erstreckt. Der Längsabschnitt kann sich nur über einen Teil der Gesamtlänge des Rotorblatts bzw. Rotorblattsegments erstrecken, während ein angrenzender Längsabschnitt des Rotorblatts bzw. Rotorblattsegments keinen Abschnitt des Seils enthält. Das mindestens eine Seil kann in dem U-förmig umgelenkten Abschnitt fest mit dem Rotorblatt bzw. Rotorblattsegment verbunden oder darin verankert sein oder verschieblich darin angeordnet oder geführt sein. Es versteht sich, dass das Rotorblatt bzw. Rotorblattsegment mehrere U-förmig umgelenkte Seile aufweisen kann, insbesondere über einen Umfang des Rotorblatts bzw. Rotorblattsegments mehr oder weniger gleichmäßig verteilt angeordnet.

Durch das U-förmig umgelenkte Seil kann eine auf das Seil ausgeübte Zugspannung großflächig in das Rotorblatt bzw. Rotorblattsegment eingeleitet werden, ohne dass hierzu eine über die Umlenkung hinausgehende Verankerung des Seils erforderlich ist. Außerdem kann das Seil im Bereich der U-förmigen Umlenkung und/oder in angrenzenden Längsabschnitten, also in einem relativ großen Längsbereich, frei verschieblich durch das Rotorblatt bzw. Rotorblattsegment geführt sein. Dadurch wird eine relativ hohe Elastizität erreicht, was eine gleichmäßige Vorspannung auch unter Belastung begünstigt. Ein weiterer Vorteil ist, dass die Anzahl der erforderlichen Spannvorgänge gegenüber einer geradlinigen Seilverbindung halbiert werden kann, weil jedes der mindestens einen Seile an einem ersten Ende fest verankert werden kann und lediglich beim Befestigen des anderen Endes eine Vorspannung ausgeübt werden muss.

In einer Ausgestaltung verläuft ein U-förmig umgelenkter Abschnitt des mindestens einen Seils in einem im Wesentlichen gleichmäßigen Abstand von einer äußeren Fläche des Rotorblatts bzw. Rotorblattsegments. Die äußere Fläche kann insbesondere eine aerodynamische Fläche des Rotorblattsegments bzw. Rotorblatts sein, etwa eine Druck- oder Saugseite. Insbesondere zur Befestigung an einer Rotornabe kann der U-förmig umgelenkte Abschnitt in einem im Wesentlichen zylindrischen Blattwurzelbereich angeordnet sein, und die äußere Fläche kann eine zylindermantelförmige Fläche nahe der Blattwurzel sein. Die Anordnung des U-förmig umgelenkten Abschnitts oder des gesamten Seils in einem gleichmäßigen Abstand von einer äußeren Fläche ist aus Festigkeitsgesichtspunkten vorteilhaft.

In einer Ausgestaltung weist das Rotorblatt bzw. Rotorblattsegment ein U-förmiges Hüllrohr auf, durch das das mindestens eine Seil hindurchgeführt ist. Grundsätzlich kann die U-förmige Umlenkung des mindestens einen Seils auch unabhängig von einem Hüllrohr erfolgen, beispielsweise durch unmittelbares Einbetten des mindestens einen Seils in eine Wandung des Rotorblatts bzw. Rotorblattsegments oder durch Anordnen des mindestens einen Seils in einem U-förmigen, in der Wandung ausgebildeten Kanal oder sonstigen Freiraum. Denkbar ist auch, im Rotorblatt bzw. Rotorblattsegment ein sonstiges Verankerungselement festzulegen, um das das mindestens eine Seil U-förmig herumgeführt wird. Ein solches Verankerungselement kann beispielsweise ein zylindrischer Metallkörper sein, beispielsweise mit einer halbkreisförmigen Grundfläche, der quer zur Längsrichtung des Rotorblatts bzw. Rotorblattsegments in einer Wandung desselben angeordnet bzw. in diese eingebettet ist. Bei Verwendung eines U-förmigen Hüllrohrs kann dieses fest mit dem Rotorblatt bzw. Rotorblattsegment verbunden sein, beispielsweise durch Verkleben. Es stellt eine Führung für das mindestens eine Seil dar. Das Hüllrohr kann beispielsweise aus Stahl bestehen, aber auch eine Fertigung aus einem anderen Metall oder aus Kunststoff ist möglich. Die beiden Enden des Hüllrohres können bündig mit einer Anschlussfläche des Rotorblatts bzw. Rotorblattsegments abschließen. Die Verwendung eines Hüllrohrs begünstigt eine gleichmäßige Krafteinleitung in das Rotorblatt bzw. Rotorblattsegment, insbesondere wenn dieses aus einem faserverstärkten Kunststoffmaterial besteht. Zudem stellt es einen gewünschten, U-förmigen Verlauf des mindestens einen Seils sicher und vereinfacht die Montage des Seils. Dabei kann das Seil erst nach Fertigstellung aller übrigen Komponenten des Rotorblatts bzw. Rotorblattsegments in das Hüllrohr eingeführt werden.

In einer Ausgestaltung ist das U-förmige Hüllrohr in eine Wandung des Rotorblatts bzw. Rotorblattsegments eingebettet. Die Wandung kann im Bereich des Hüllrohrs verstärkt sein, insbesondere durch eine Verdickung zur Innenseite des Rotorblatts bzw. Rotorblattsegments hin. Eine solche Verstärkung ist jedoch nicht zwingend erforderlich. Durch das Einbetten des Hüllrohrs erfolgt eine besonders großflächige und gleichmäßige Krafteinleitung in das Rotorblatt bzw. Rotorblattsegment.

In einer Ausgestaltung weist das Rotorblatt bzw. Rotorblattsegment ein Kunststoffmaterial mit einer Fliessgrenze auf und das mindestens eine Seil ist dazu ausgelegt, im an einer Rotornabe oder an einem weiteren Rotorblattsegment befestigten Zustand des Rotorblatts bzw. Rotorblattsegments eine vorbestimmte Vorspannung auszuüben, wobei die Kontaktflächen des Kunststoffmaterials des Rotorblatts bzw. Rotorblattsegments in dem Bereich, in dem das mindestens eine Seil U-förmig umgelenkt ist, so bemessen sind, dass die von dem auslegungsgemäß vorgespannten mindestens einen Seil ausgeübte Flächenpressung die Fliessgrenze des Kunststoffmaterials nicht überschreitet. Als Fliessgrenze wird diejenige pro Flächeneinheit auszuübende Kraft bezeichnet, die eine plastische Verformung des Kunststoffmaterials bewirkt. Das Kunststoffmaterial kann insbesondere ein faserverstärkter Kunststoff sein. Die Kontaktflächen können Oberflächen des Kunststoffmaterials sein, die entweder unmittelbar mit dem Seil oder über einen der Verankerung dienenden weiteren Körper mit dem mindestens einen Seil zusammenwirken. Insbesondere können die Kontaktflächen an äußere Flächen eines Hüllrohrs angrenzen. Die von dem Seil ausgeübte Flächenpressung auf diese Kontaktflächen hängt von der Geometrie der Kontaktflächen, insbesondere von der Form und Breite des U-förmigen Abschnitts des Seils oder eines das Seil umgebenden Hüllrohrs sowie von der vorgesehenen Vorspannung ab. Eine Abstimmung dieser Parameter aufeinander derart, dass die Fliessgrenze nicht überschritten wird, bietet den wichtigen Vorteil, dass die definierte Vorspannung zuverlässig auch über längere Zeiträume aufrechterhalten bleibt. Dies kann Wartungsarbeiten zwecks Überprüfung der Vorspannung, wie sie bei herkömmlichen Bolzenverbindungen erforderlich sein können, entbehrlich machen. Bei der Abstimmung der genannten Parameter aufeinander kann eine dynamische Belastung, die über die definierte Vorspannung hinausgehende Zugspannungen mit sich bringt, berücksichtigt werden.

In einer Ausgestaltung weist mindestens ein Ende des Seils eine Seilendhülse auf. Die Seilendhülse ermöglicht eine Befestigung des Seilendes an einer Rotornabe oder einem weiteren Rotorblattsegment. Grundsätzlich können die Enden des Seils auf beliebige Weise befestigt werden, beispielsweise mit einer Kausche, einem flämischen Auge oder einer sonstigen Spleißverbindung, oder mit einem Seilschloss. Die Befestigung mit einer Seilendhülse kann besonders kompakt ausgeführt werden. Die Seilendhülse kann eine aufgepresste Presshülse oder eine vergossene Seilendhülse sein. An der Seilendhülse kann ein Gewinde ausgebildet sein, so dass die Seilendhülse beispielsweise durch eine Durchgangsbohrung in einem Verankerungselement oder in einem Flansch einer Rotornabe hindurchgeführt werden und an dessen Rückseite mit einer Mutter festgelegt und gegebenenfalls vorgespannt werden kann. Auf diese Weise wird eine besonders einfache Befestigung des jeweiligen Seilendes ermöglicht.

In einer Ausgestaltung ist das vorstehend erläuterte Rotorblatt oder Rotorblattsegment Teil eines Systems, zu dem auch eine Rotornabe gehört, und beide Enden des mindestens einen Seils sind in oder an der Rotornabe verankert. Auf diese Weise sind Rotorblatt bzw. Rotorblattsegment und Rotornabe über das mindestens eine Seil fest miteinander verbunden. Es versteht sich, dass mehrere Seile verwendet werden können, die jeweils U-förmig in dem Rotorblatt bzw. Rotorblattsegment umgelenkt sind, insbesondere in einer über den Umfang des Rotorblatts bzw. Rotorblattsegments annähernd gleichmäßig verteilten Anordnung.

In einer Ausgestaltung ist das vorstehend beschriebene Rotorblatt oder Rotorblattsegment Teil eines Systems, zu dem auch eine Rotornabe gehört, wobei das mindestens eine Seil in oder an der Rotornabe ebenfalls U-förmig umgelenkt ist und ein erstes Ende des mindestens einen Seils in dem Rotorblatt bzw. Rotorblattsegment und ein zweites Ende des mindestens einen Seils in oder an der Rotornabe verankert ist. Die Umlenkung in oder an der Rotornabe kann insbesondere so erfolgen, wie vorstehend bezüglich der U-förmigen Umlenkung in dem Rotorblatt bzw. Rotorblattsegment im Einzelnen erläutert. Die beiden U-förmigen Abschnitte des mindestens einen Seils sind in den beiden verbundenen Bauteilen einander gegenüberliegend versetzt angeordnet, insbesondere so, dass ein Schenkelabschnitt des ersten U-förmigen Abschnitts in einen zweiten Schenkelabschnitt des zweiten U-förmigen Abschnitts übergeht, insbesondere geradlinig. Die beiden U-förmigen Abschnitte sind mit anderen Worten im Wesentlichen S-förmig angeordnet. Durch die zweifache, U-förmige Umlenkung des mindestens einen Seils kann die Anzahl der erforderlichen Spannvorgänge weiter reduziert werden, da das mindestens eine Seil die beiden Bauteile an drei voneinander beabstandeten Punkten gleichzeitig aneinander heranziehen und die definierte Vorspannung ausüben kann. Außerdem kann die Gleichmäßigkeit der ausgeübten Vorspannung optimiert werden, sofern die auftretenden Reibungskräfte zwischen dem mindestens einen Seil und angrenzenden Kontaktflächen, insbesondere der Hüllrohre, hinreichend klein gehalten werden.

In einer Ausgestaltung ist das vorstehend erläuterte Rotorblatt bzw. Rotorblattsegment Teil eines Systems, das eine Rotornabe umfasst, wobei das mindestens eine Seil in oder an der Rotornabe ebenfalls U-förmig umgelenkt ist und in dem Rotorblatt bzw. Rotorblattsegment oder in oder an der Rotornabe zweimal U-förmig umgelenkt ist und beide Enden des mindestens einen Seils in dem Rotorblatt bzw. Rotorblattsegment oder in oder an der Rotornabe verankert sind. In dieser Ausgestaltung verläuft das mindestens eine Seil "serpentinenartig", wobei insgesamt drei U-förmige Abschnitte vorhanden sind. Die entlang des Seils ersten und dritten U-förmigen Abschnitte sind in einem der beiden miteinander verbundenen Bauteile angeordnet, während der zweite, mittlere U-förmige Abschnitt in dem anderen Bauteil angeordnet ist. Die beiden Schenkelabschnitte des zweiten, mittleren U-förmigen Abschnitts können jeweils in einen Schenkelabschnitt eines der ersten und dritten U-förmigen Abschnitte übergehen, insbesondere geradlinig. Die U-förmigen Abschnitte sind einander gegenüberliegend und versetzt angeordnet. Die beiden Enden des Seils sind in demjenigen Bauelement befestigt, in dem auch die zweite, mittlere U-förmige Umlenkung des Seils erfolgt. Durch diese serpentinenartige Anordnung des Seils kann die Anzahl der erforderlichen Spannvorgänge weiter reduziert werden.

In einer Ausgestaltung ist das vorstehend erläuterte Rotorblattsegment Teil eines Systems, das auch ein weiteres Rotorblattsegment umfasst, wobei beide Enden des Seils in dem weiteren Rotorblattsegment verankert sind. Auf diese Weise sind die beiden Rotorblattsegmente des Systems fest miteinander verbunden.

In einer Ausgestaltung ist das vorstehend beschriebene Rotorblattsegment Teil eines Systems, das ein weiteres Rotorblattsegment enthält, wobei das mindestens eine Seil in dem weiteren Rotorblattsegment ebenfalls U-förmig umgelenkt ist und ein erstes Ende des mindestens einen Seils in dem Rotorblattsegment und ein zweites Ende des mindestens einen Seils in dem weiteren Rotorblattsegment verankert sind. Die Umlenkung in dem weiteren Rotorblattsegment kann insbesondere so ausgestaltet sein, wie mit Blick auf die U-förmige Umlenkung in dem Rotorblattsegment vorstehend bereits ausführlich erläutert.

In einer Ausgestaltung ist das vorstehend erläuterte Rotorblattsegment Teil eines Systems, das ein weiteres Rotorblattsegment aufweist, wobei das mindestens eine Seil in dem weiteren Rotorblattsegment ebenfalls U-förmig umgelenkt ist und das mindestens eine Seil in dem Rotorblattsegment oder in dem weiteren Rotorblattsegment zweimal U-förmig umgelenkt ist und beide Enden des mindestens einen Seils in dem Rotorblattsegment oder in dem weiteren Rotorblattsegment verankert sind. In dieser Ausgestaltung nimmt das mindestens eine Seil wieder eine serpentinenartige Konfiguration an. Auf die vorstehenden Erläuterungen hierzu wird verwiesen.

Die oben angegebene Aufgabe wird ebenfalls gelöst durch ein Verfahren zur Befestigung eines Rotorblatts oder Rotorblattsegments an einer Rotornabe oder einem weiteren Rotorblattsegment mit den Merkmalen des Anspruchs 13. Vorteilhafte Ausgestaltungen sind in den sich anschließenden Unteransprüchen angegeben.

Das erfindungsgemäße Verfahren weist die folgenden Schritte auf:
- Bereitstellen eines Rotorblatts oder eines Rotorblattsegments mit den Merkmalen einer der vorstehend erläuterten Ausgestaltungen,
- Bereitstellen einer Rotornabe oder eines weiteren Rotorblattsegments, an dem das Rotorblatt bzw. das Rotorblattsegment befestigt werden soll,
- Anordnen von Rotorblatt oder Rotorblattsegment und Rotornabe bzw. weiterem Rotorblattsegment in einer vorgesehenen Montageposition,
- Verankern eines ersten Endes des mindestens einen Seils in dem Rotorblatt bzw. Rotorblattsegment oder in oder an der Rotornabe bzw. dem weiteren Rotorblattsegment,
- Verankern eines zweiten Endes des mindestens einen Seils in dem Rotorblatt bzw. Rotorblattsegment oder in oder an der Rotornabe bzw. dem weiteren Rotorblattsegment.

Die genannten Merkmalsalternativen schließen die folgenden Verfahren ein:
- Befestigen eines Rotorblatts an einer Rotornabe,
- Befestigen eines Rotorblattsegments an einer Rotornabe, oder
- Befestigen eines Rotorblattsegments an einem weiteren Rotorblattsegment.

Für jede dieser Verfahrensalternativen kann das Befestigungsverfahren und das erfindungsgemäße Rotorblatt bzw. Rotorblattsegment sinnvoll eingesetzt werden. Verfahrensergebnis ist ein System aus zwei durch das mindestens eine Seil fest miteinander verbundenen Bauteilen. Hinsichtlich der Verfahrensmerkmale und der Vorteile des Verfahrens wird auf die vorstehenden Erläuterungen zum Rotorblatt bzw. Rotorblattsegment verwiesen.

In einer Ausgestaltung wird beim Verankern des zweiten Endes des mindestens einen Seils in einem ersten Schritt eine definierte Vorspannung erzeugt und in einem zweiten Schritt erfolgt eine Fixierung des zweiten Endes des mindestens einen Seils. Die definierte Vorspannung kann von einem Spannwerkzeug, insbesondere einem hydraulischen Spannwerkzeug erzeugt werden. Das Fixieren des zweiten Endes kann beispielsweise durch Aufschrauben einer Mutter auf eine ein Gewinde aufweisende Seilendhülse erfolgen. Besonders vorteilhaft an diesem Vorgehen ist, dass zur Vorspannung zweier eine Verbindungsstelle zwischen den beiden Bauteilen überbrückender Seilabschnitte nur ein einziger Spannvorgang erforderlich ist.

In einer Ausgestaltung wird das mindestens eine Seil in oder an der Rotornabe bzw. dem weiteren Rotorblattsegment U-förmig umgelenkt. Hierzu kann das mindestens eine Seil beispielsweise durch ein U-förmiges Hüllrohr oder eine sonstige Führung hindurchgeführt werden, die an der Rotornabe oder in dem weiteren Rotorblattsegment ausgebildet ist. Auf diese Weise kann das mindestens eine Seil eine Verbindungsstelle zwischen den beiden Bauteilen dreimal überspannen, wobei gegebenenfalls wiederum nur ein einziger Vorspannvorgang zum Ausüben der Vorspannung an allen drei Verbindungsstellen erforderlich ist. Es versteht sich, dass diese Ausgestaltung sowie die zuvor erläuterten Ausgestaltungen der erfindungsgemäßen Verfahren insbesondere in Verbindung mit einem der vorstehend erläuterten Systeme aus einem Rotorblatt bzw. Rotorblattsegment und einem weiteren Bauteil ausgeführt werden können.

Die Erfindung wird nachfolgend anhand von in Figuren dargestellten Ausführungsbeispielen näher erläutert. Es zeigen:
- Fig. 1: ein erfindungsgemäßes System mit einem aus zwei Rotorblattsegmenten bestehenden Rotorblatt und einer Rotornabe,
- Fig. 2: eine teilweise geschnittene, perspektivische Ansicht des Blattwurzelbereichs eines erfindungsgemäßen Rotorblatts,
- Fig. 3: eine Ausschnittsvergrößerung aus Fig. 2,
- Fig. 4: den Blattwurzelbereich eines erfindungsgemäßen Rotorblatts mit beispielhaften Seilbefestigern,
- Fig. 5: einen Verbindungsbereich zweier miteinander verbundener Rotorblattsegmente in einer schematischen Darstellung,
- Fig. 6: einen anderen Verbindungsbereich zweier Rotorblattsegmente in einer schematischen Darstellung,
- Fig. 7: einen weiteren Verbindungsbereich zweier Rotorblattsegmente in einer schematischen Darstellung.

Gleiche oder sich entsprechende Teile sind in allen Figuren mit denselben Bezugszeichen versehen.

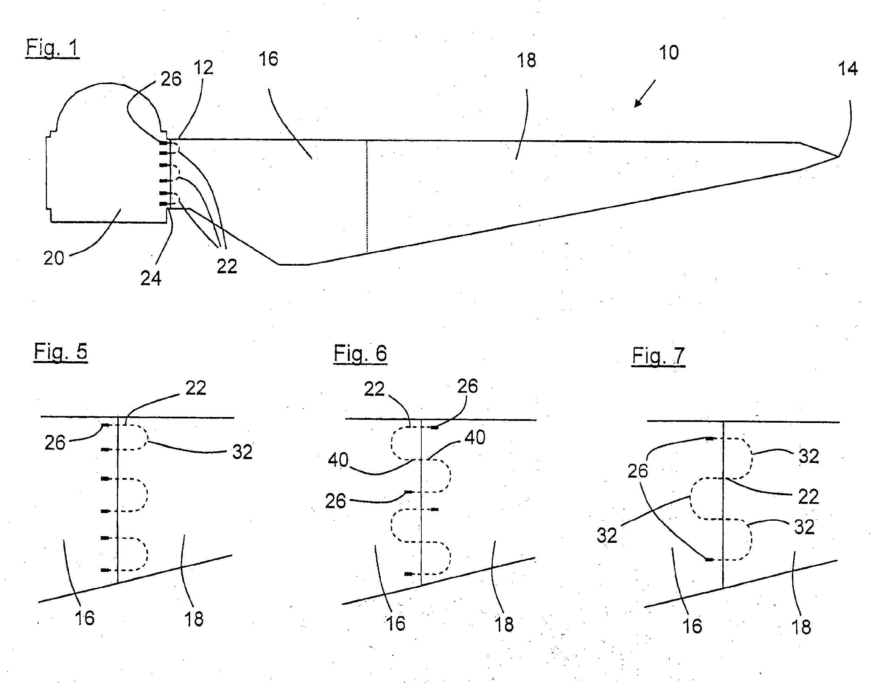

Das in Fig. 1 dargestellte Rotorblatt 10 hat eine Blattwurzel 12 und eine Blattspitze 14 und ist aus zwei Rotorblattsegmenten 16, 18 zusammengesetzt. Das Rotorblattsegment 16 erstreckt sich von der Blattwurzel 12 ausgehend über etwa ein Drittel der Länge des Rotorblatts 10. Das Rotorblattsegment 18 erstreckt sich ungefähr über die verbleibenden zwei Drittel der Rotorblattlänge bis zur Blattspitze 14.

Die Blattwurzel 12 ist an einer Rotornabe 20 befestigt. Hierzu sind mehrere Stahlseile 22 vorhanden, die gestrichelt eingezeichnet sind. Jedes Stahlseil ist innerhalb eines nahe der Blattwurzel 12 angeordneten Abschnitts des Rotorblattsegments 16 U-förmig umgelenkt, so dass die beiden Enden jedes Seils in Richtung zu einem in der Figur nur angedeuteten Flansch 24 der Rotornabe 20 weisen. Jedes Endes jedes der Seile 22 erstreckt sich durch eine nicht dargestellte Durchgangsbohrung im Flansch 24 der Rotornabe 20 hindurch und ist dahinter mit einer Sicherung 26 verankert. Jedes der Seile 22 übt eine definierte Vorspannung aus. Die beiden Rotorblattsegmente 16, 18 des Rotorblatts 10 sind ebenfalls über mehrere Seile miteinander verbunden, was in der Fig. 1 jedoch nicht dargestellt ist.

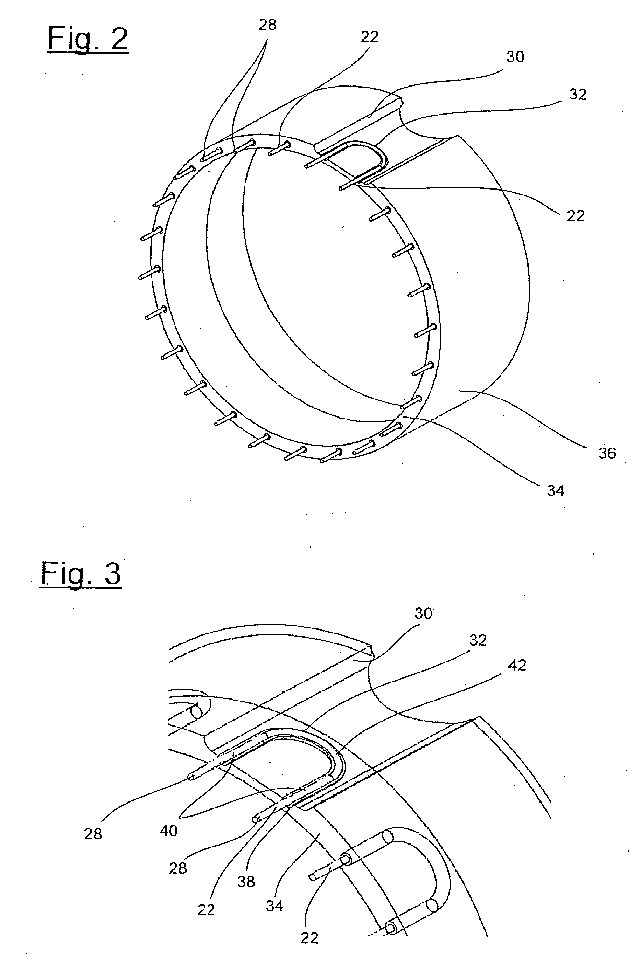

Fig. 2 zeigt das blattwurzelseitige Ende eines erfindungsgemäßen Rotorblatts in einer perspektivischen Ansicht. Das Rotorblatt weist eine Vielzahl von Seilen 22 auf, von denen in der Figur mit Ausnahme eines oben dargestellten Seils 22 im Wesentlichen die aus dem Rotorblatt hervorstehenden Enden 28 sichtbar sind. Jeweils zwei der Enden 28 gehören zu einem Seil 22, die im Inneren einer Wandung 30 des Rotorblatts U-förmig umgelenkt sind.

Zu Zwecken der Darstellung ist in einer Umgebung des oben gezeigten Seils 22 das Material der Wandung 30 teilweise geschnitten dargestellt, so dass ein U-förmiger Abschnitt 32 des Seils 22 sichtbar ist.

Die Blattwurzel des in der Fig. 2 dargestellten Rotorblatts weist eine ringförmige Anschlussfläche 34 auf, die im montierten Zustand an einen Flansch 24 der Rotornabe 20 angrenzt. Im Übrigen ist der Blattwurzelbereich des gezeigten Rotorblatts im Wesentlichen kreiszylindrisch mit einer kreiszylindermantelförmigen äußeren Fläche 36. Die Seile 22, insbesondere die U-förmig umgelenkten Abschnitte 32, verlaufen in einem gleichmäßigen Abstand von dieser äußeren Fläche 36. Alle aus der Anschlussfläche 34 hervorstehenden Enden 28 der Seile 22 weisen einen gleichmäßigen Abstand voneinander auf. Die Breite der U-förmig umgelenkten Abschnitte 32 entspricht somit dem Abstand, der zwischen benachbarten Enden zweier U-förmig umgelenkter Seile 22 ausgebildet ist.

Weitere Einzelheiten des U-förmig umgelenkten Seils 22 sind in der Fig. 3 deutlicher zu erkennen, die teilweise auch verdeckte Linien zeigt. Gut erkennbar ist der U-förmige Verlauf des Seils 22, mit zwei im Wesentlichen parallel angeordneten, in Längsrichtung des Rotorblatts verlaufenden Schenkelabschnitten 40, die in einen mittleren, bogenförmigen Abschnitt 42 des U-förmig umgelenkten Abschnitts 32 übergehen. Der bogenförmige Abschnitt 42 überstreicht einen Winkel von 180°.

Das Seil 22 ist durch ein U-förmiges Hüllrohr 38 hindurchgeführt, das in die Wandung 30 eingebettet ist. Das Einbetten erfolgte durch Einlaminieren des Hüllrohrs 38, das im Beispiel aus Stahl besteht, in das faserverstärkte Kunststoffmaterial der Wandung 30. Die beiden Enden des U-förmigen Hüllrohrs 38 schließen bündig mit der Anschlussfläche 34 des Rotorblatts ab.

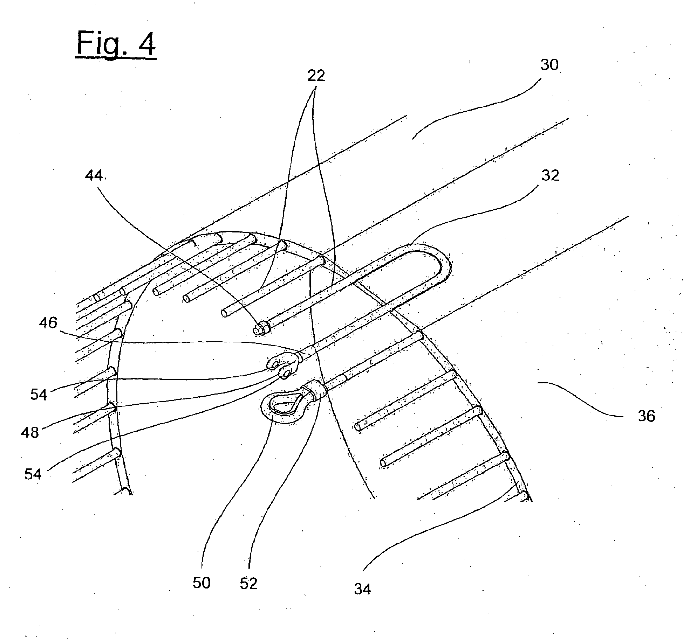

Fig. 4 zeigt ein weiteres Ausführungsbeispiel in einer perspektivischen Ansicht, bei dem die Wandung 30 eines blattwurzelnahen Bereichs des dargestellten Rotorblatts wiederum teilweise geschnitten dargestellt ist, um den U-förmigen Verlauf eines der Seile 22 zu veranschaulichen. Gegenüber dem Ausführungsbeispiel der Figuren 2 und 3 fällt die geringe Wandstärke der Wandung 30 auf, die den Durchmesser der verwendeten Seile 22 nur geringfügig übersteigt, z.B. um weniger als einen halben Durchmesser. Fig. 4 dient insbesondere zur Veranschaulichung unterschiedlicher Seilverbinder. Das oben dargestellte Seil 22 ist mit einer in der Figur nicht im Einzelnen dargestellten Seilendhülse verbunden, beispielsweise durch Vergießen, wobei die Seilendhülse ein Gewinde aufweist, auf dem eine Mutter 44 angeordnet ist.

Das rechts daneben dargestellte andere Ende des Seils 22 weist ebenfalls eine Seilendhülse 46 auf, die in einen sich gabelförmig öffnenden Befestigungsabschnitt 48 mit gegenüberliegenden Befestigungsbohrungen 54 übergeht.

Als weitere Möglichkeit einer Seilendverbindung zeigt die Fig. 4 rechts daneben eine Kausche 50 mit einer Pressklemme 52.

Mit Blick auf die Verbindung zweier Rotorblattsegmente 16, 18 zeigen die Figuren 5 bis 7 unterschiedliche Ausführungsbeispiele der Erfindung. Im Beispiel der Fig. 5 sind drei U-förmig umgelenkte Seile 22 dargestellt, deren U-förmig umgelenkte Abschnitte 32 sich jeweils innerhalb des blattspitzenseitigen Rotorblattsegments 18 befinden. Die beiden Enden jedes der Seile 22 sind mit jeweils einer Sicherung 26 im blattwurzelseitigen Rotorblattsegment 16 verankert.

Fig. 6 zeigt zwei S-förmig angeordnete Seile 22. Jedes der Seile 22 ist einmal im Rotorblattsegment 16 und einmal Rotorblattsegment 18 U-förmig umgelenkt. Die einander zugewandten Schenkelabschnitte 40 gehen geradlinig ineinander über. Ein erstes Ende jedes der beiden Seile 22 ist im Rotorblattsegment 16 mit einer Sicherung 26 verankert; ein zweites Ende jedes der Seile 22 ist im Rotorblattsegment 18 ebenfalls mit einer Sicherung 26 verankert.

Fig. 7 zeigt ein serpentinenartig konfiguriertes Seil 22, das im Rotorblattsegment 16 einen mittig angeordneten, U-förmig umgelenkten Abschnitt 32 aufweist und zwei daran anschließende, U-förmig umgelenkte Abschnitte 32, die im Rotorblattsegment 18 angeordnet sind. Beide Enden des Seils 22 sind mit jeweils einer Sicherung 26 im Rotorblattsegment 16 verankert.

## Patentansprüche

1. System mit einem Rotorblatt (10) oder einem Rotorblattsegment (16) für eine Windenergieanlage, einer Rotornabe (20) und mindestens einem Seil (22) zur Befestigung des Rotorblatts (10) bzw. des Rotorblattsegments (16) an der Rotornabe (20), **dadurch gekennzeichnet, dass**
• das mindestens eine Seil (22) einen U-förmig umgelenkten Abschnitt, ein erstes Ende und ein zweites Ende aufweist,
• der U-förmig umgelenkte Abschnitt des mindestens einen Seils (22) innerhalb des Rotorblatts (10) bzw. des Rotorblattsegments (16) angeordnet ist,
• das erste Ende des mindestens einen Seils (22) in dem Rotorblatt (10) bzw. dem Rotorblattsegment (16) oder in oder an der Rotornabe (20) verankert ist, und
• das zweite Endes (28) des mindestens einen Seils (22) in dem Rotorblatt (10) bzw. Rotorblattsegment (16) oder in oder an der Rotornabe (20) verankert ist.

2. System nach Anspruch 1, **dadurch gekennzeichnet, dass** das mindestens eine Seil (22) in oder an der Rotornabe (20) ebenfalls U-förmig umgelenkt ist und das erste Ende (28) des mindestens einen Seils (22) in dem Rotorblatt (10) bzw. Rotorblattsegment (16) und das zweite Ende (28) des mindestens einen Seils (22) in oder an der Rotornabe (20) verankert ist.

3. System nach Anspruch 1, **dadurch gekennzeichnet, dass** das mindestens eine Seil (22) in oder an der Rotornabe (20) ebenfalls U-förmig umgelenkt ist, wobei das mindestens eine Seil (22) in dem Rotorblatt (10) bzw. Rotorblattsegment (16) oder in oder an der Rotornabe (20) zweimal U-förmig umgelenkt ist und das erste Ende des mindestens einen Seils (22) und das zweite Ende des mindestens einen Seils (22) in dem Rotorblatt (10) bzw. Rotorblattsegment (16) oder in oder an der Rotornabe (20) verankert sind.

4. System mit einem Rotorblattsegment (16), einem weiteren Rotorblattsegment (18) und mindestens einem Seil (22) zur Befestigung des Rotorblattsegments (16) an dem weiteren Rotorblattsegment (18), **dadurch gekennzeichnet, dass**
• das mindestens eine Seil (22) einen U-förmig umgelenkten Abschnitt, ein erstes Ende und ein zweites Ende aufweist,
• der U-förmig umgelenkte Abschnitt des mindestens einen Seils (22) innerhalb des Rotorblattsegments (16) angeordnet ist,
• das erste Ende des mindestens einen Seils (22) in dem Rotorblattsegment (16) oder dem weiteren Rotorblattsegment (18) verankert ist, und
• das zweite Endes (28) des mindestens einen Seils (22) in dem Rotorblattsegment (16) oder dem weiteren Rotorblattsegment (18) verankert ist.

5. System nach Anspruch 4, **dadurch gekennzeichnet, dass** das mindestens eine Seil in dem weiteren Rotorblattsegment (18) ebenfalls U-förmig umgelenkt ist und das erste Ende (28) des mindestens einen Seils (22) in dem Rotorblattsegment (16) und das zweite Ende (28) des mindestens einen Seils (22) in dem weiteren Rotorblattsegment (18) verankert ist.

6. System nach Anspruch 4, **dadurch gekennzeichnet, dass** das mindestens eine Seil (22) in dem weiteren Rotorblattsegment (18) ebenfalls U-förmig umgelenkt ist, wobei das mindestens eine Seil (22) in dem Rotorblattsegment (16) oder in dem weiteren Rotorblattsegment (18) zweimal U-förmig umgelenkt ist und beide Enden (28) des mindestens einen Seils (22) in dem Rotorblattsegment (16) oder in dem weiteren Rotorblattsegment (18) verankert sind.

7. System nach einem der Ansprüche 1 bis 6, **dadurch gekennzeichnet, dass** einer der U-förmig umgelenkten Abschnitt (32) des mindestens einen Seils (22) in einem im Wesentlichen gleichmäßigen Abstand von einer äußeren Fläche (36) des Rotorblatts (10) bzw. Rotorblattsegments (16) verläuft.

8. System nach einem der Ansprüche 1 bis 7, **dadurch gekennzeichnet, dass** das Rotorblatt (10) bzw. Rotorblattsegment (16) ein U-förmiges Hüllrohr (38) aufweist, durch das das mindestens eine Seil (22) hindurchgeführt ist.

9. System nach Anspruch 8, **dadurch gekennzeichnet, dass** das U-förmige Hüllrohr (38) in eine Wandung (30) des Rotorblatts (10) bzw. Rotorblattsegments (16) eingebettet ist.

10. System nach einem der Ansprüche 1 bis 9, **dadurch gekennzeichnet, dass** das Rotorblatt (10) bzw. Rotorblattsegment (16) ein Kunststoffmaterial mit einer Fliessgrenze aufweist und das mindestens eine Seil (22) dazu ausgelegt ist, im an der Rotornabe (20) bwz. an dem weiteren Rotorblattsegment (18) befestigten Zustand des Rotorblatts (10) bzw. Rotorblattsegments (16) eine vorbestimmte Vorspannung auszuüben, wobei die Kontaktflächen des Kunststoffmaterials des Rotorblatts (10) bzw. Rotorblattsegments (16) in dem Bereich, in dem das mindestens eine Seil (22) U-förmig umgelenkt ist, so bemessen sind, dass die von dem auslegungsgemäß vorgespannten mindestens einen Seil (22) ausgeübte Flächenpressung die Fliessgrenze des Kunststoffmaterials nicht überschreitet.

11. System nach einem der Ansprüche 1 bis 10, **dadurch gekennzeichnet, dass** mindestens eines der Enden des mindestens einen Seils (22) eine Seilendhülse (46) aufweist.

12. Verfahren zur Befestigung eines Rotorblatts (10) oder Rotorblattsegments (16) an einer Rotornabe (20) oder einem weiteren Rotorblattsegment (18), mit den folgenden Schritten:
• Bereitstellen eines Rotorblatts (10) oder eines Rotorblattsegments (16) für eine Windenergieanlage und mindestens eines Seils (22) zur Befestigung des Rotorblatts (10) bzw. des Rotorblattsegments (16) an einer Rotornabe (20) oder an einem weiteren Rotorblattsegment (18), wobei das mindestens eine Seil (22) einen U-förmig umgelenkten Abschnitt, der innerhalb des Rotorblatts (10) bzw. des Rotorblattsegments (16) angeordnet ist, sowie ein erstes Ende und ein zweites Ende aufweist,
• Bereitstellen einer Rotornabe (20) oder eines weiteren Rotorblattsegments (18), an dem das Rotorblatt (10) bzw. das Rotorblattsegment (16) befestigt werden soll,
• Anordnen von Rotorblatt (10) oder Rotorblattsegment (16) und Rotornabe (20) bzw. weiterem Rotorblattsegment (18) in einer vorgesehenen Montageposition,
• Verankern eines ersten Endes (28) des mindestens einen Seils (22) in dem Rotorblatt (10) bzw. Rotorblattsegment (16) oder in oder an der Rotornabe (20) bzw. dem weiteren Rotorblattsegment (18),
• Verankern eines zweiten Endes (28) des mindestens einen Seils (22) in dem Rotorblatt (10) bzw. Rotorblattsegment (16) oder in oder an der Rotornabe (20) bzw. dem weiteren Rotorblattsegment (18).

13. Verfahren nach Anspruch 12, **dadurch gekennzeichnet, dass** beim Verankern des zweiten Endes (28) des mindestens einen Seils (22) in einem ersten Schritt eine definierte Vorspannung erzeugt wird und in einem zweiten Schritt eine Fixierung des zweiten Endes (28) des mindestens einen Seils (22) erfolgt.

14. Verfahren nach Anspruch 12 oder 13, **dadurch gekennzeichnet, dass** das mindestens eine Seil (22) in oder an der Rotornabe (20) bzw. dem weiteren Rotorblattsegment (18) U-förmig umgelenkt wird.

## Claims

1. A system comprising a rotor blade (10) or a rotor blade segment (16) for a wind turbine, a rotor hub (20) and at least one cable (22) for assembling the rotor blade (10) or the rotor blade segment (16) at the rotor hub (20), wherein
• the at least one cable (22) has a section redirected in an U-shaped manner, a first end and a second end,
• the section of the cable (22) redirected in an U-shaped manner is arranged inside the rotor blade (10) or the rotor blade segment (16),
• the first end of the at least one cable (22) is anchored in the rotor blade (10) or in the rotor blade segment (16) or in or on the rotor hub (20), and
• the second end (28) of the at least one cable (22) is anchored in the rotor blade (10) or in the rotor blade segment (16) or in or to the rotor hub (20).

2. The system of claim 1, wherein the at least one cable (22) is redirected in an U-shaped manner in or on the rotor hub (20) as well, and the first end (28) of the at least one cable (22) is anchored in the rotor blade (10) or the rotor blade segment (16) and the second end (28) of the at least one cable (22) is anchored in or on the rotor hub (20).

3. The system of claim 1, wherein the at least one cable (22)) is redirected in an U-shaped manner in or on the rotor hub (20) as well, wherein the at least one cable (22) is redirected in an U-shaped manner twice in the rotor blade (10) or in the rotor blade segment (16) or in or on the rotor hub (20) and the first end of the at least one cable (22) and the second end of the at least one cable (22) are anchored in the rotor blade (10) or in the rotor blade segment (16) or in or on the rotor hub (20).

4. A system comprising a rotor blade segment (16), a further rotor blade segment (18) and at least one cable (22) for assembling the rotor blade segment (16) to the further rotor blade segment (18), wherein
• the at least one cable (22) has a section redirected in an U-shaped manner, a first end and a second end,
• the section of the cable (22) redirected in an U-shaped manner is arranged inside the rotor blade segment (16),
• the first end of the at least one cable (22) is anchored in the rotor blade segment (16) or in the further rotor blade segment (18), and
• the second end (28) of the at least one cable (22) is anchored in the rotor blade segment (16) or in the further rotor blade segment (18).

5. The system of claim 4, wherein the at least one cable (22) in the further rotor blade segment (18) is redirected in an U-shaped manner as well and the first end (28) of the at least one cable (22) is anchored in the rotor blade segment (16) and the second end (28) of the at least one cable (22) is anchored in the further rotor blade segment (18).

6. The system of claim 4, wherein the at least one cable (22) in the further rotor blade segment (18) is redirected in an U-shaped manner as well, wherein the at least one cable (22) is redirected in an U-shaped manner twice in the rotor blade segment (16) or in the further rotor blade segment (18) and both ends (28) of the at least on cable (22) are anchored in the rotor blade segment (16) or in the further rotor blade segment (18).

7. The system of claim 1 to 6, wherein one of the sections of the cable (22) redirected in an U-shaped manner runs in the rotor blade or the rotor blade segment at a substantially uniform distance from a outer surface (36).

8. The system of claim 1 to 7, wherein the rotor blade (10) or the rotor blade segment (16) includes an U-shaped cable duct (38) through which the at least one cable (22) runs.

9. The system of claim 8, wherein the U-shaped cable duct (38) is embedded in a wall (30) of the rotor blade (10) or the rotor blade segment (16).

10. The system of claim 1 to 9, wherein the rotor blade (10) or the rotor blade segment (16) is made of a plastic material having a yield point and the at least one cable (22) is configured to apply a predetermined pre-tensioning in the mounted state of the rotor blade (10) or the rotor blade segment (18) on the rotor hub (20) or the further rotor blade segment (18), wherein the contact surfaces of the plastic material of the rotor blade (10) or the rotor blade segment (16) in the area in which the cable is redirected in a U-shaped manner are so dimensioned that the surface pressure applied by the cable (22) does not cause said yield point of said plastic material to be exceeded.

11. The system of claim 1 to 10, wherein at least one of the ends of the at least one cable has a cable end sleeve (46).

12. A method for fixing a rotor blade (10) or a rotor blade segment (16) on a rotor hub (20) or a further rotor blade segment (18), comprising the steps of:
• providing a rotor blade (10) or a rotor blade segment (16) for a wind turbine and at least one cable (22) for assembling the rotor blade (10) or the rotor blade segment (16) at a rotor hub (10) or a further rotor blade segment (18), wherein the at least one cable (22) comprises a segment redirected in an U-shaped manner, which is arranged inside the rotor blade (10) or the rotor blade segment (16), and a first end and a second end,
• providing a rotor hub (20) or a further rotor blade segment (18), at which the rotor blade (10) or rotor blade segment (16) is to be fastened,
• arranging the rotor blade (10) or the rotor blade segment (16) und the rotor hub (20) or the further rotor blade segment (18) in a designated mounting position,
• anchoring a first end (28) of the at least one cable (22) in the rotor blade (10) or rotor blade segment (16) or in or on the rotor hub (20) or the further rotor blade segment (18),
• anchoring a second end (28) of the at least one cable (22) in the rotor blade (10) or rotor blade segment (16) or in or on the rotor hub (20) or the further rotor blade segment (18).

13. The method of claim 12, wherein during anchoring the second end (28) of the at least one cable (22) a defined pretension is generated in a first step, and a fixing of the second end (28) of the at least one cable (22) occurs in a second step.

14. The method of claim 12 or 13, wherein the at least one cable (22) is redirected in an U-shaped manner in or on the rotor hub (20) or the further rotor blade segment (18).

## Revendications

1. Système avec une pale de rotor (10) ou un segment de pale de rotor (16) pour une installation d'énergie éolienne, un moyeu de rotor (20) et au moins un câble (22) pour la fixation de la pale de rotor (10) ou du segment de pale de rotor (16) sur le moyeu de rotor (20), **caractérisé en ce que**
• le au moins un câble (22) présente une section cintrée en forme de U, une première extrémité et une deuxième extrémité,
• la section cintrée en forme de U du au moins un câble (22) est disposée à l'intérieur de la pale de rotor (10) ou du segment de pale de rotor (16),
• la première extrémité du au moins un câble (22) est ancrée dans la pale de rotor (10) ou le segment de pale de rotor (16) ou dans ou sur le moyeu de rotor (20), et
• la deuxième extrémité (28) du au moins un câble (22) est ancrée dans la pale de rotor (10) ou le segment de pale de rotor (16) ou dans ou sur le moyeu de rotor (20).

2. Système selon la revendication 1, **caractérisé en ce que** le au moins un câble (22) est également cintré en forme de U dans ou sur le moyeu de rotor (20) et la première extrémité (28) du au moins un câble (22) est ancrée dans la pale de rotor (10) ou le segment de pale de rotor (16) et la deuxième extrémité (28) du au moins un câble (22) est ancrée dans ou sur le moyeu de rotor (20).

3. Système selon la revendication 1, **caractérisé en ce que** le au moins un câble (22) est également cintré en forme de U dans ou sur le moyeu de rotor (20), dans lequel le au moins un câble (22) est cintré en forme de U deux fois dans la pale de rotor (10) ou le segment de pale de rotor (16) ou dans ou sur le moyeu de rotor (20) et la première extrémité du au moins un câble (22) et la deuxième extrémité du au moins un câble (22) sont ancrées dans la pale de rotor (10) ou le segment de pale de rotor (16) ou dans ou sur le moyeu de rotor (20).

4. Système avec un segment de pale de rotor (16), un autre segment de pale de rotor (18) et au moins un câble (22) pour la fixation du segment de pale de rotor (16) sur l'autre segment de pale de rotor (18), **caractérisé en ce que**
• le au moins un câble (22) présente une section cintrée en forme de U, une première extrémité et une deuxième extrémité,
• la section cintrée en forme de U du au moins un câble (22) est disposée à l'intérieur du segment de pale de rotor (16),
• la première extrémité du au moins un câble (22) est ancrée dans le segment de pale de rotor (16) ou l'autre segment de pale de rotor (18), et
• la deuxième extrémité du au moins un câble (22) est ancrée dans le segment de pale de rotor (16) ou l'autre segment de pale de rotor (18).

5. Système selon la revendication 4, **caractérisé en ce que** le au moins un câble est également cintré en forme de U dans l'autre segment de pale de rotor (18) et la première extrémité (28) du au moins un câble (22) est ancrée dans le segment de pale de rotor (16) et la deuxième extrémité (28) du au moins un câble (22) est ancrée dans l'autre segment de pale de rotor (18).

6. Système selon la revendication 4, **caractérisé en ce que** le au moins un câble (22) est également cintré en forme de U dans l'autre segment de pale de rotor (18), dans lequel le au moins un câble (22) est cintré en forme de U deux fois dans le segment de pale de rotor (16) ou dans l'autre segment de pale de rotor (18) et les deux extrémités (28) du au moins un câble (22) sont ancrées dans le segment de pale de rotor (16) ou dans l'autre segment de pale de rotor (18).

7. Système selon l'une quelconque des revendications 1 à 6, **caractérisé en ce qu'**une des sections cintrées en forme de U (32) du au moins un câble (22) court à une distance essentiellement uniforme d'une surface extérieure (36) de la pale de rotor (10) ou du segment de pale de rotor (16).

8. Système selon l'une quelconque des revendications 1 à 7, **caractérisé en ce que** la pale de rotor (10) ou le segment de pale de rotor (16) présente un tube de gainage en forme de U (38) à travers lequel le au moins un câble (22) est conduit.

9. Système selon la revendication 8, **caractérisé en ce que** le tube de gainage en forme de U (38) est intégré dans une paroi (30) de la pale de rotor (10) ou du segment de pale de rotor (16).

10. Système selon l'une quelconque des revendications 1 à 9, **caractérisé en ce que** la pale de rotor (10) ou le segment de pale de rotor (16) présente une matière plastique avec un seuil d'écoulement et le au moins un câble (22) est conçu de manière à exercer une précontrainte prédéfinie à l'état fixé de la pale de rotor (10) ou du segment de pale de rotor (16) sur le moyeu de rotor (20) ou sur l'autre segment de pale de rotor (18), dans lequel les surfaces de contact de la matière plastique de la pale de rotor (10) ou du segment de pale de rotor (16) sont dimensionnées dans la zone dans laquelle le au moins un câble (22) est cintré en forme de U de manière à ce que la pression superficielle exercée par le au moins un câble (22) précontraint dans le cadre défini ne dépasse pas le seuil d'écoulement de la matière plastique.

11. Système selon l'une quelconque des revendications 1 à 10, **caractérisé en ce que** au moins une des extrémités du au moins un câble (22) présente un embout de câble (46).

12. Procédé de fixation d'une pale de rotor (10) ou d'un segment de pale de rotor (16) sur un moyeu de rotor (20) ou un autre segment de pale de rotor (18), avec les étapes suivantes :
• fourniture d'une pale de rotor (10) ou d'un segment de pale de rotor (16) pour un installation d'énergie éolienne et d'au moins un câble (22) pour la fixation de la pale de rotor (10) ou du segment de pale de rotor (16) sur un moyeu de rotor (20) ou sur un autre segment de pale de rotor (18), le au moins un câble (22) présentant une section cintrée en forme de U disposée à l'intérieur de la pale de rotor (10) ou du segment de pale de rotor (16) ainsi qu'une première extrémité et une deuxième extrémité,
• fourniture d'un moyeu de rotor (20) ou d'un autre segment de pale de rotor (18) sur lequel la pale de rotor (10) ou le segment de pale de rotor (16) doit être fixé,
• disposition de la pale de rotor (10) ou du segment de pale de rotor (16) et du moyeu de rotor (20) ou de l'autre segment de pale de rotor (18) dans une position de montage prévue,
• ancrage d'une première extrémité (28) du au moins un câble (22) dans la pale de rotor (10) ou le segment de pale de rotor (16) ou dans ou sur le moyeu de rotor (20) ou l'autre segment de pale de rotor (18),
• ancrage d'une deuxième extrémité (28) du au moins un câble (22) dans la pale de rotor (10) ou le segment de pale de rotor (16) ou dans ou sur le moyeu de rotor (20) ou l'autre segment de pale de rotor (18).

13. Procédé selon la revendication 12, **caractérisé en ce que**, lors de l'ancrage de la deuxième extrémité (28) du au moins un câble (22), une précontrainte définie est générée dans une première étape et, dans une deuxième étape, la deuxième extrémité (28) du au moins un câble (22) est fixée.

14. Procédé selon la revendication 12 ou 13, **caractérisé en ce que** le au moins un câble (22) est cintré en forme de U dans ou sur le moyeu de rotor (20) ou l'autre segment de pale de rotor (18).
